# FASCICULE DE BREVET EUROPEEN

(11) **EP 3 994 061 B1**
(45) Date de publication et mention de la délivrance du brevet: **28.06.2023**
(21) Numéro de dépôt: 20747070.9
(22) Date de dépôt: 02.07.2020
(51) Int. Cl.: B64D 11/06, B60N 2/02, F16D 11/08, F16D 11/10, F16D 11/12, F16D 11/04, B60N 2/22, B60N 2/42, B60N 2/06

(54) **SIÈGE D'AÉRONEF**
FLUGZEUGSITZ
AIRCRAFT SEAT

(30) Priorité: 02.07.2019 FR 1907345
(43) Date de publication de la demande: 11.05.2022
(73) Titulaire: Safran Electronics & Defence Actuation, 89002 Auxerre Cédex (FR)
(72) Inventeur: AUBRUN, Julien, 95000 CERGY (FR); PIRIS, Miguel, 77610 LA HOUSSAYE EN BRIE (FR); GUEROULT, Olivier, 95100 ARGENTEUIL (FR); BERDAH, Emmanuel, 93300 AUBERVILLERS (FR); DELONG, Joffrey, 75020 PARIS (FR)
(74) Mandataire: Plasseraud IP
(86) Numéro de dépôt international: PCT/FR2020/051169
(87) Numéro de publication internationale: WO 2021/001636

(56) Documents cités:
- WO-A2-2015/104378

## Description

La présente divulgation relève du domaine des sièges pour aéronef.
Dans un aéronef, les sièges ainsi que les parties de siège peuvent être déplacés ou pivotés par des systèmes d'entrainement. Ces systèmes d'entrainement sont, par exemple, propres à faire pivoter le dossier du siège par rapport à l'assise ou à déplacer le siège par rapport au sol. Les systèmes d'entrainement comportent un actionneur et une chaine de transmission. Les pièces mécaniques de ces systèmes d'entrainement doivent être capable de supporter des charges correspondants à une situation d'arrêt brutal (généralement appelé « crash » en anglais) sans que les pièces mécaniques ne se rompent et puissent blesser un passager. Au cours d'une situation d'arrêt brutal, le siège doit ainsi résister à des poussées de 9 à 16 g. Ces pièces mécaniques doivent également être capables de supporter des charges brusques, importantes et répétées subies, par exemple, lorsque l'aéronef reprend de la portance après avoir traversé un trou d'air ou lorsqu'une personne obèse se laisse tomber violement sur le siège. Face à ces situations, les pièces mécaniques de la chaine de transmission ne doivent ni se casser ni s'user prématurément pour limiter le nombre d'arrêts au sol à des fins de maintenance.

Pour atteindre cet objectif, les pièces mécaniques des systèmes d'entrainement d'aéronef, sont surdimensionnés. Toutefois, ce surdimensionnement augmente à la fois le coût de fabrication des pièces mécaniques et le poids de l'aéronef. Or, il est souhaitable de réduire le poids de l'aéronef afin de diminuer la quantité de kérosène nécessaire pour effectuer un trajet donné, et, ainsi limiter le coût du transport aérien et préserver l'environnement. Le document WO 2015/104378 A2 divulgue un siège de cabine pour aéronef, comprenant une pluralité d'éléments mobiles les uns par rapport aux autres, et un actionneur pour déplacer au moins une partie desdits éléments mobiles les uns par rapport aux autres.

L'invention vient améliorer la situation.

L'invention concerne un siège d'aéronef comprenant au moins un actionneur apte à générer un mouvement et au moins un dispositif de transmission du mouvement comprenant :
- un support ;
- un bâti fixe par rapport au support, ledit bâti étant pourvu d'une partie de blocage,
- un arbre d'entrainement propre à être entrainé en rotation autour d'un axe de rotation par l'actionneur,
- un pignon muni de dents d'accouplement ayant des parois latérales inclinées, ledit pignon étant libre en rotation par rapport à l'arbre d'entrainement ;
- un manchon monté coulissant sur l'arbre d'entrainement et solidaire en rotation de l'arbre d'entrainement, le manchon comprenant une partie de blocage complémentaire propre à s'accoupler avec la partie de blocage du bâti et des dents d'accouplement ayant des parois latérales inclinées propres à s'accoupler avec les dents d'accouplement du pignon ;
- un élément élastique propre à pousser le manchon selon une direction axiale en direction du pignon pour accoupler le manchon au pignon ; l'élément élastique ayant une raideur ; la raideur de l'élément élastique et l'inclinaison des parois latérales des dents d'accouplement du pignon et des dents d'accouplement du manchon étant choisies de sorte que lorsqu'un couple supérieur à un couple seuil est appliqué au pignon, le manchon coulisse sur l'arbre d'entrainement d'une position d'entrainement dans laquelle le manchon est accouplé au pignon, vers une position de blocage dans laquelle la partie de blocage du bâti est accouplée à la partie de blocage complémentaire du manchon.

Le siège d'aéronef selon l'invention comporte un dispositif de transmission qui permet de contrer un effort excessivement important afin que l'actionneur et les pièces mécaniques du système de transmission n'aient pas besoin d'endurer cet effort. Cette reprise d'effort s'effectue au travers d'une voie de fonctionnement dédiée et permet ne pas avoir à surdimensionner la voie de fonctionnement normal.

Avantageusement, le dispositif de transmission est un système purement mécanique qui n'a pas besoin d'apport énergétique externe. Il n'a pas besoin d'un système de contrôle et d'exécution pour fonctionner. Le dispositif de transmission est insérer dans un système de transmission rotatif quelconque et n'entrave pas son fonctionnement. De par sa fonction d'asservissement en verrouillage ainsi que son adaptabilité, le dispositif de transmission du siège d'aéronef permet un dimensionnement de l'actionneur et des pièces mécaniques du système de transmission et in fine un gain de masse et/ou un abaissement des exigences technique de la fonction principale de transmission.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- les parois latérales des dents d'accouplement du manchon forment un angle compris entre 8° et 30° par rapport à l'axe de rotation et dans lequel l'élément élastique présente une raideur comprise entre 2 daN/mm et 15 daN/mm,
- la partie de blocage comporte des rainures s'étendant sur un premier arc de cercle et dans lequel la partie de blocage complémentaire comporte des saillies s'étendant sur un deuxième arc de cercle, le deuxième arc de cercle étant inférieur au premier arc de cercle,
- la hauteur des dents d'accouplement du pignon et/ou la hauteur des dents d'accouplement du manchon est supérieure à la hauteur des saillies de la partie de blocage et/ou à la hauteur de saillies de la partie complémentaire de blocage,
- une première extrémité du bâti comporte un lamage , et le manchon comporte un logement disposé en regard du lamage du bâti ; l'élément élastique est agencé autour de l'arbre d'entrainement et logé en partie dans le lamage du manchon et en partie dans le logement du manchon,
- la face interne du manchon et la face externe de l'arbre d'entrainement comporte une liaison glissière s'étendant selon la direction de l'axe de rotation,
- la face interne du manchon et la face externe de l'arbre d'entrainement comporte, l'une, une rainure s'étendant selon la direction de l'axe de rotation et, l'autre, un évidement et une clavette logée dans l'évidement et propre à coulisser dans la rainure,
- dans lequel le dispositif de transmission comporte une première butée agencée sur l'arbre d'entrainement, une deuxième butée agencée sur l'arbre d'entrainement à une distance prédéfinie de la première butée, et dans lequel le pignon, le manchon, l'élément élastique et le bâti sont emmanchés sur l'arbre d'entrainement entre la première butée et la deuxième butée.

### Brève description des dessins

D'autres caractéristiques, détails et avantages apparaîtront à la lecture de la description détaillée ci-après, et à l'analyse des dessins annexés, sur lesquels :
[Fig. 1] est une vue latérale schématique d'un siège d'un aéronef selon l'invention.
[Fig. 2] est une vue en perspective de côté d'un dispositif de transmission du siège d'aéronef selon l'invention.
[Fig. 3] est une vue en perspective éclatée du dispositif de transmission illustré sur la figure 2.
[Fig. 4] est une section axiale d'une partie du dispositif de transmission illustrée sur la figure 2, lorsque le dispositif de transmission est dans une position d'entrainement.
[Fig. 5] est une vue de côté de la partie du dispositif de transmission illustrée sur la figure 4.
[Fig. 6] est une section axiale d'une partie du dispositif de transmission illustrée sur la figure 2, lorsque le dispositif de transmission est dans une position de blocage.
[Fig. 7] est une vue de côté de la partie du dispositif de transmission illustrée sur la figure 6.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

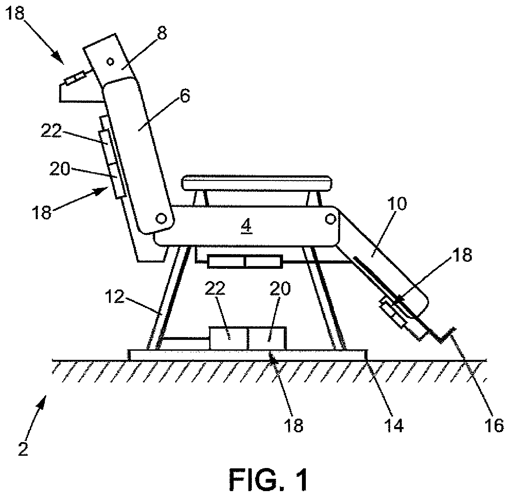

En référence à la figure 1, un exemple de siège d'aéronef 2 selon la présente invention est représenté. Il comporte une assise 4, un dossier 6 monté pivotant par rapport à l'assise 4, un appui-tête 8 monté pivotant par rapport au dossier 6, un repose jambes 10, des pieds 12 et des glissières 14 fixées au sol. Les pieds 12 du siège sont propres à coulisser dans les glissières 14 pour déplacer le siège 2 en avant ou en arrière. Le siège 2 peut également comporter un repose-pieds passager 16 adapté pour coulisser par rapport au repose jambes 10 entre une position rétractée et une position déployée.

Le siège 2 comporte un ou plusieurs systèmes d'entrainement 18 électriques dédiés au pivotement de chacune de ces articulations et au déplacement du siège 2 et du repose-pieds passager 16. Chaque système d'entrainement 18 comprend un actionneur rotatif ou linéaire 20 et un système de transmission 22 du mouvement généré par l'actionneur vers l'élément de siège à déplacer.

Le système de transmission 22 comprend des pièces mécaniques adaptées pour transmettre le mouvement généré par l'actionneur 20 à un élément mobile du siège. Ces pièces mécaniques comprennent par exemple des pignonneries, des bielles, une crémaillère etc.

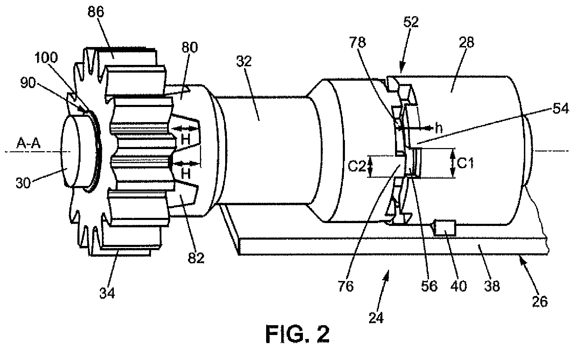

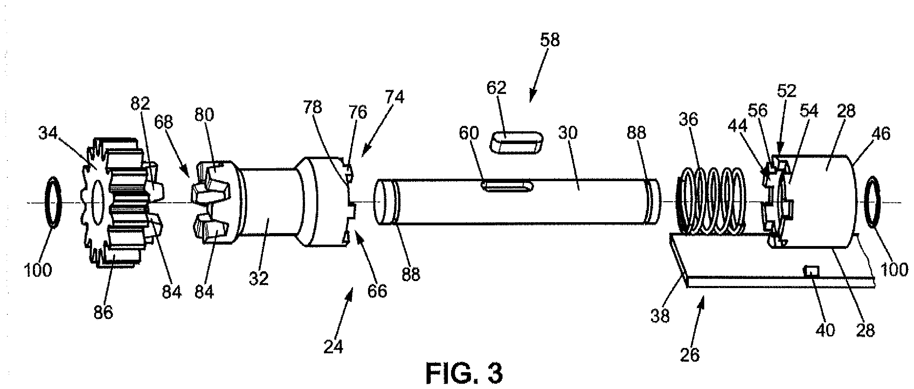

Le système de transmission 22 comprend également un dispositif de transmission 24 représenté notamment sur les figures 2 et 3. Ce dispositif de transmission 24 comporte un support 26, un bâti 28 fixé au support 26 et un arbre d'entrainement 30 ayant un axe longitudinal formant un axe de rotation A-A. Ce dispositif de transmission 24 comprend en outre un manchon 32, un pignon de sortie 34 et un élément élastique 36 agencé autour de l'arbre d'entrainement 30.

Le support 26 est, par exemple, constitué par une platine 38 et une chape 40 solidaire de la platine 38.

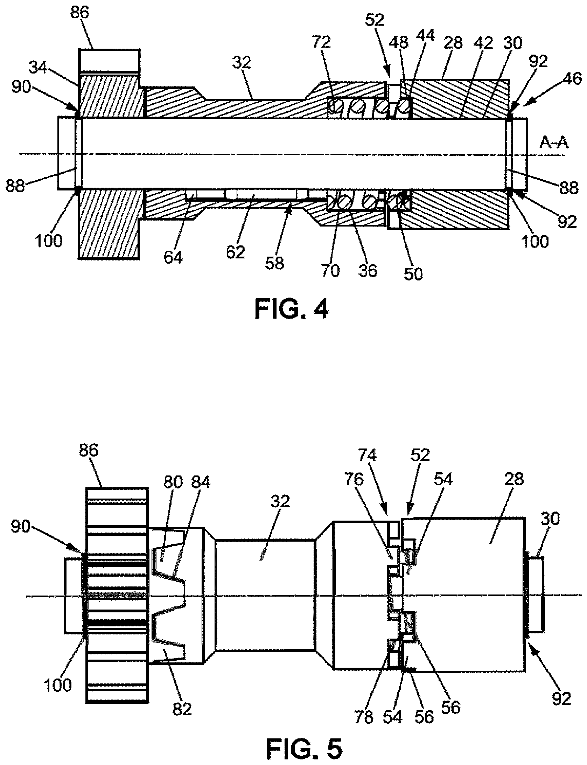

Le bâti 28 est fixé à la platine 38 par l'intermédiaire de la chape 40. Dans l'exemple représenté, le bâti 28 présente une forme de cylindrique de révolution. En référence aux figures 4 et 5, le bâti 28 est pourvu d'un alésage 42 ayant un diamètre sensiblement égal au diamètre de l'arbre d'entrainement 30 à un jeu près. L'alésage 42 s'étend par exemple autour de l'axe central du cylindre de révolution. Le bâti 28 comporte une première face d'extrémité 44 située en regard du manchon 32 et une seconde face d'extrémité 46 opposée à la première face d'extrémité. La première face d'extrémité 44 comprend un lamage 48 propre à accueillir une partie de l'élément élastique 36. La paroi annulaire de fond du lamage constitue une face d'appui 50 pour une extrémité de l'élément élastique 36.

La première face d'extrémité 44 est également pourvue d'une partie de blocage 52 d'un dispositif de blocage en rotation du manchon 32 par rapport au bâti 28. Dans le mode de réalisation représenté, le dispositif de blocage est un accouplement temporairement inactif de type crabotage. La partie de blocage 52 est constituée par une alternance de saillies 54 et rainures 56 s'étendant autour du bord tubulaire de la première face d'extrémité 44 du bâti. Les saillies 54 présentent une forme de créneau. Les rainures 56 agencées entre deux saillies 54 s'étendent sur un arc de cercle C1, illustré sur la figure 2.

L'arbre d'entrainement 30 est monté libre en rotation dans l'alésage 42 du bâti. L'arbre d'entrainement 30 est propre à être entrainé en rotation autour de l'axe de rotation A-A par une pièce mécanique du système de transmission ou par l'actionneur.

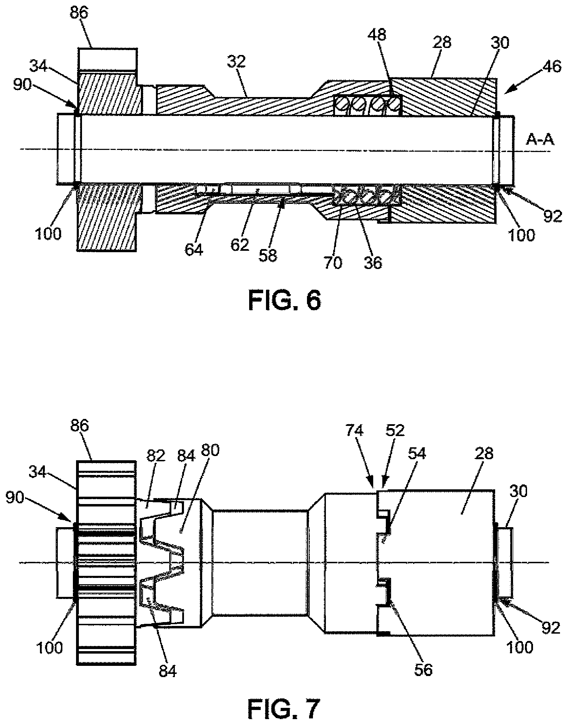

Le manchon 32 est monté coulissant autour de l'arbre d'entrainement 30. Il forme une navette coulissante propre à se déplacer entre une position d'entrainement du pignon de sortie 34, représentée sur les figures 4 et 5, et une position de blocage ou d'immobilisation du pignon de sortie 34, représentée sur les figures 6 et 7.

Le manchon 32 est solidaire en rotation de l'arbre d'entrainement 30. A cet effet, une liaison glissière 58 est formée entre le manchon 32 et l'arbre d'entrainement 30. Cette liaison glissière 58 s'étend selon la direction de l'axe de rotation A-A, comme représenté sur les figures 3 et 4. Dans le mode de réalisation représenté, cette liaison glissière 58 comprend un évidemment 60 pratiqué sur la face cylindrique externe de l'arbre d'entrainement 30 et une clavette 62 logée dans l'évidement ainsi qu'une rainure 64 agencée sur la face intérieure du manchon 32. Cette rainure 64 s'étend longitudinalement selon la direction de l'axe de rotation A-A.

En référence aux figures 3 et 4, le manchon 32 comporte une première face d'extrémité 66 disposée en regard du bâti 28 et une deuxième face d'extrémité 68 disposée en regard du pignon de sortie 34.

La première face d'extrémité 66 comprend un logement 70 circulaire et central propre à accueillir une partie de l'élément élastique 36. Le fond annulaire de ce logement forme une face d'appui 72 pour l'élément élastique. La face d'appui 50 du bâti et la face d'appui 72 du manchon sont perpendiculaires à l'axe de rotation A-A.

L'élément élastique 36 est emmanché autour de l'arbre d'entrainement 30. Il est propre à agir entre le bâti 28 et le manchon 32. En particulier, dans le mode de réalisation représenté, l'élément élastique 36 est en appui contre la face d'appui 50 du bâti et contre la face d'appui 72 du manchon. Il est agencé en partie dans le lamage 48 du bâti et en partie dans le logement 70 du manchon. L'élément élastique 36 est propre à pousser le manchon 32 selon une direction axiale en direction du pignon de sortie 34. L'élément élastique 36 présente une raideur comprise entre 2daN/mm et 15daN/mm.

Dans le mode de réalisation représenté, l'élément élastique 36 est un ressort de compression. En variante, l'élément élastique 36 peut être constitué par une ou plusieurs rondelles ressorts de type rondelles de Belleville ou ressort à lame ondulée aussi appelée rondelles de « Smalley ».

En référence à la figure 5, la première face d'extrémité 66 du manchon est également pourvue d'une partie de blocage complémentaire 74 du dispositif de blocage destinée à coopérer avec la partie de blocage 52. La partie de blocage complémentaire 74 du dispositif de blocage est également constituée par une alternance de saillies 76 et rainures 78 s'étendant autour du bord tubulaire de la première face d'extrémité 66 du manchon. Les saillies 76 présentent une forme de créneau et s'étendent le long d'un arc de cercle C2 illustré sur la figure 2. Avantageusement, dans le mode de réalisation représenté, l'arc de cercle C2 est inférieur à l'arc de cercle C1 pour faciliter l'accouplement de la partie complémentaire 74 avec la partie de blocage 52.

La deuxième face d'extrémité 68 du manchon est munie de dents d'accouplement 80 s'étendant axialement. Ces dents d'accouplement 80 sont propres à s'accoupler avec des dents d'accouplement 82 s'étendant axialement du pignon de sortie 34. Les dents d'accouplement 80 du manchon et les dents d'accouplement 82 du pignon de sortie forment un accouplement de type crabot.

Les dents d'accouplement 80 du manchon et les dents d'accouplement 82 du pignon de sortie présentent des parois latérales 84 inclinées par rapport à l'axe de rotation A-A de sorte que les dents d'accouplement 80 du manchon sont propres à frotter et à glisser contre les dents d'accouplement 82 du pignon de sortie, lorsqu'un couple prédéfini est appliqué sur le pignon de sortie. Ainsi, comme visible sur les figures, les dents d'accouplement 80 du manchon et les dents d'accouplement 82 du pignon de sortie présentent une forme générale triangulaire Avantageusement, les parois latérales 84 forment un angle α compris entre 8° et 30° par rapport à l'axe de rotation A-A.

Avantageusement, l'inclinaison des parois latérales 84 des dents d'accouplement 80, 82, la raideur de l'élément élastique 36 et les frottements de la liaison glissière 68 peuvent être adaptés afin que le dispositif de transmission 24 bloque la transmission du mouvement à partir de l'application d'un couple seuil choisi afin de protéger l'actionneur 20 et les pièces mécaniques du système de transmission 22 en cas de choc brutal. Le dispositif de transmission est un système de verrouillage mécanique permettant le blocage du système rotatif à un couple souhaité par un asservissement mécanique du verrouillage.

De préférence, la hauteur H des dents d'accouplement 80 du manchon et la hauteur H des dents d'accouplement 82 du pignon de sortie est supérieure à la hauteur h des saillies 54 du bâti et à la hauteur h des saillies 76 du manchon de sorte que les dents d'accouplement 80 du manchon restent toujours en prise avec les dents d'accouplement 82 du pignon de sortie. Ainsi, le dispositif de blocage peut à nouveau entrainer le pignon de sortie 34 après un positionnement de blocage du dispositif de transmission sans intervention d'un technicien.

Le pignon de sortie 34 est monté libre en rotation autour de l'arbre d'entrainement 30. De façon classique, il comporte les dents d'accouplement 82 s'étendant axialement, et des dents d'engrenage 86 s'étendant radialement propres à s'accoupler à une crémaillère, un pignon ou une autre pièce du système de transmission 22.

Le dispositif de transmission 24 comporte une première butée 90 et une deuxième butée 92 agencées sur l'arbre d'entrainement. La deuxième butée 92 est positionnée à une distance prédéfinie de la première butée 90. Cette distance prédéfinie est sensiblement supérieure à la somme de la largueur du pignon, la largeur du manchon 32 et la largeur du bâti 28.

Dans le mode de réalisation représenté, la première 90 et la deuxième 92 butées comporte chacune une rainure périphérique 88 circulaire et un anneau d'arrêt 100 propre à être encastré dans une rainure périphérique 88 pour bloquer le déplacement axial du bâti 28, du manchon 32 et du pignon de sortie 34. En variante, la première 90 et la deuxième 92 butées sont par exemple constituées par un circlip ou un épaulement sur l'arbre d'entrainement 30.

En variante, les saillies 54 et rainures 56 de la partie de blocage 52 et les saillies 76 et rainures 78 de la partie de blocage complémentaire 74 sont remplacées par une surface annulaire de frottement. Selon cette variante, la rotation du manchon 32 est bloquée par frottement d'une partie tubulaire du manchon contre une partie tubulaire du bâti.

En fonctionnement, à l'état passif, le dispositif de transmission 24 est dans une position d'entrainement. Dans cette position, l'élément élastique 36 plaque le manchon 32 vers le pignon de sortie 34 comme représenté sur les figures 4 et 5. Les dents d'accouplement 80 du manchon sont accouplées aux dents d'accouplements 82 du pignon de sortie. Lorsqu'un passager souhaite déplacer ou faire pivoter un élément mobile du siège, il commande l'actionneur 20 afin que celui-ci entraine l'arbre d'entrainement 30 en rotation autour de l'axe de rotation A-A. L'arbre d'entrainement 30 entraine en rotation le manchon 32. le manchon 32 fait pivoter le pignon de sortie 34 par l'intermédiaire de l'accouplement des dents d'accouplement 80 du manchon et des dents d'accouplements 82 du pignon de sortie. Le mouvement généré par l'actionneur 20 est transmis au pignon de sortie 34.

Lorsqu'un couple important est appliqué au pignon de sortie 34, par exemple au cours d'une situation d'arrêt brutal, le dispositif de transmission 24 s'auto-positionne dans une position de blocage. En effet, le couple transmis par le pignon de sortie 34 par l'effet de l'inclinaison des faces latérales 84 des dents d'accouplement 80, 82 du manchon et du pignon vainc l'effort fournit par l'élément élastique 36 pour plaquer le manchon 32 contre le pignon de sortie 34. Le manchon 32 se déplace alors axialement vers le bâti 28. La partie de blocage 74 du manchon s'accouple à la partie de blocage 52 du bâti. Comme le bâti 28 est fixe, le manchon 32 est bloqué en rotation par rapport au bâti.

## Revendications

1. Siège d'aéronef (2) comprenant au moins un actionneur (20) apte à générer un mouvement et au moins un dispositif de transmission (24) du mouvement, le dispositif de transmission (24) comprenant :
- un support (38);
- un bâti (28) fixe par rapport au support (38), ledit bâti (28) étant pourvu d'une partie de blocage (52),
- un arbre d'entrainement (30) propre à être entrainé en rotation autour d'un axe de rotation (A-A) par l'actionneur (20),
- un pignon (34) muni de dents d'accouplement (82) ayant des parois latérales (84) inclinées, ledit pignon (34) étant libre en rotation par rapport à l'arbre d'entrainement (30);
- un manchon (32) monté coulissant sur l'arbre d'entrainement (30) et solidaire en rotation de l'arbre d'entrainement (30), le manchon (32) comprenant une partie de blocage complémentaire (74) propre à s'accoupler avec la partie de blocage (52) du bâti et des dents d'accouplement (80) ayant des parois latérales (84) inclinées propres à s'accoupler avec les dents d'accouplement (82) du pignon ;
- un élément élastique (36) propre à pousser le manchon (32) selon une direction axiale en direction du pignon (34) pour accoupler le manchon (32) au pignon (34); l'élément élastique ayant une raideur ; la raideur de l'élément élastique (36) et l'inclinaison des parois latérales (84) des dents d'accouplement (82) du pignon et des dents d'accouplement (80) du manchon étant choisies de sorte que lorsqu'un couple supérieur à un couple seuil est appliqué au pignon (34), le manchon (32) coulisse sur l'arbre d'entrainement (30) d'une position d'entrainement dans laquelle le manchon (32) est accouplé au pignon (34), vers une position de blocage dans laquelle la partie de blocage (52) du bâti est accouplée à la partie de blocage complémentaire (74) du manchon.

2. Siège d'aéronef (2) selon la revendication 1, dans lequel les parois latérales (84) des dents d'accouplement (80) du manchon forment un angle compris entre 8° et 30° par rapport à l'axe de rotation (A-A) et dans lequel l'élément élastique (36) présente une raideur comprise entre 2 daN/mm et 15 daN/mm.

3. Siège d'aéronef (2) selon l'une des revendications 1 et 2, dans lequel la partie de blocage (52) comporte des rainures (56) s'étendant sur un premier arc de cercle (C1) et dans lequel la partie de blocage complémentaire (74) comporte des saillies (76) s'étendant sur un deuxième arc de cercle (C2), le deuxième arc de cercle (C2) étant inférieur au premier arc de cercle (C1).

4. Siège d'aéronef (2) selon la revendication 3, dans lequel la hauteur (H) des dents d'accouplement (82) du pignon (34) et/ou la hauteur (H) des dents d'accouplement (80) du manchon (32) est supérieure à la hauteur (h) des saillies (54) de la partie de blocage (52) et/ou à la hauteur (h) de saillies (76) de la partie complémentaire de blocage (74).

5. Siège d'aéronef (2) selon l'une quelconque des revendications 1 à 4, dans lequel une première extrémité (44) du bâti (28) comporte un lamage (48), et dans lequel le manchon (32) comporte un logement (70) disposé en regard du lamage (48) du bâti ; l'élément élastique (36) est agencé autour de l'arbre d'entrainement (30) et logé en partie dans le lamage (48) du manchon et en partie dans le logement (70) du manchon.

6. Siège d'aéronef (2) selon l'une quelconque des revendications 1 à 5, dans lequel la face interne du manchon (32) et la face externe de l'arbre d'entrainement (30) comporte une liaison glissière (58) s'étendant selon la direction de l'axe de rotation (A-A).

7. Siège d'aéronef (2) selon la revendication 6, dans lequel la face interne du manchon (32) et la face externe de l'arbre d'entrainement (30) comporte, l'une, une rainure (64) s'étendant selon la direction de l'axe de rotation et, l'autre, un évidement (60) et une clavette (62) logée dans l'évidement (60) et propre à coulisser dans la rainure (64).

8. Siège d'aéronef (2) selon l'une quelconque des revendications 1 à 7, dans lequel le dispositif de transmission (24) comporte une première butée (90) agencée sur l'arbre d'entrainement (30), une deuxième butée (92) agencée sur l'arbre d'entrainement (30) à une distance prédéfinie de la première butée (90), et dans lequel le pignon (34), le manchon (32), l'élément élastique (36) et le bâti (28) sont emmanchés sur l'arbre d'entrainement (30) entre la première butée (90) et la deuxième butée (92).

9. Siège d'aéronef (2) selon la revendication 8, dans lequel la première butée (90) comporte une rainure périphérique (88) formée sur la face externe de l'arbre d'entrainement (30) et un anneau d'arrêt (100) encastré dans la rainure périphérique (88).

## Patentansprüche

1. Flugzeugsitz (2) mit zumindest einem Betätigungsglied (20), das eine Bewegung erzeugen kann, und zumindest einer Übertragungsvorrichtung (24) zur Übertragung der Bewegung, wobei die Übertragungsvorrichtung (24) enthält:
- einen Träger (38);
- ein Gestell (28), das in Bezug auf den Träger (38) feststehend ist, wobei das Gestell (28) mit einem Sicherungsteil (52) versehen ist,
- eine Antriebswelle (30), die dazu geeignet ist, durch das Betätigungsglied (20) um eine Drehachse (A-A) drehend angetrieben zu werden,
- ein Zahnrad (34), das mit Kopplungszähnen (82) versehen ist, die geneigt verlaufende Seitenwände (84) aufweisen, wobei das Zahnrad (34) in Bezug auf die Antriebswelle (30) frei drehbar ist;
- eine Hülse (32), die gleitbeweglich auf der Antriebswelle (30) gelagert und drehfest mit der Antriebswelle (30) verbunden ist, wobei die Hülse (32) ein komplementär ausgebildetes Sicherungsteil (74), das mit dem Sicherungsteil (52) des Gestells koppelbar ist, und Kopplungszähne (80) mit geneigt verlaufenden Seitenwänden (84) umfasst, die mit den Kopplungszähnen (82) des Zahnrads koppelbar sind;
- ein elastisches Element (36), das dazu geeignet ist, die Hülse (32) in einer axialen Richtung zum Zahnrad (34) hin zu drücken, um die Hülse (32) mit dem Zahnrad (34) zu koppeln; wobei das elastische Element eine Steifigkeit aufweist; wobei die Steifigkeit des elastischen Elements (36) und die Neigung der Seitenwände (84) der Kopplungszähne (82) des Zahnrads und der Kopplungszähne (80) der Hülse so gewählt sind, dass bei Aufbringen eines Drehmoments, das höher als ein Schwellendrehmoment ist, auf das Zahnrad (34) die Hülse (32) auf der Antriebswelle (30) aus einer Antriebsstellung, in der die Hülse (32) mit dem Zahnrad (34) gekoppelt ist, in eine Sicherungsstellung gleitet, in der das Sicherungsteil (52) des Gestells mit dem komplementär ausgebildeten Sicherungsteil (74) der Hülse gekoppelt ist.

2. Flugzeugsitz (2) nach Anspruch 1, wobei die Seitenwände (84) der Kopplungszähne (80) der Hülse einen Winkel zwischen 8° und 30° in Bezug auf die Drehachse (A-A) einschließen und wobei das elastische Element (36) eine Steifigkeit zwischen 2 daN/mm und 15 daN/mm aufweist.

3. Flugzeugsitz (2) nach einem der Ansprüche 1 und 2, wobei das Sicherungsteil (52) Nuten (56) aufweist, die sich über einen ersten Kreisbogen (C1) erstrecken, und wobei das komplementär ausgebildete Sicherungsteil (74) Vorsprünge (76) aufweist, die sich über einen zweiten Kreisbogen (C2) erstrecken, wobei der zweite Kreisbogen (C2) kleiner ist als der erste Kreisbogen (C1).

4. Flugzeugsitz (2) nach Anspruch 3, wobei die Höhe (H) der Kopplungszähne (82) des Zahnrads (34) und/oder die Höhe (H) der Kopplungszähne (80) der Hülse (32) größer ist als die Höhe (h) der Vorsprünge (54) des Sicherungsteils (52) und/oder die Höhe (h) der Vorsprünge (76) des komplementär ausgebildeten Sicherungsteils (74).

5. Flugzeugsitz (2) nach einem der Ansprüche 1 bis 4, wobei ein erstes Ende (44) des Gestells (28) eine Senkung (48) aufweist, und wobei die Hülse (32) eine Aufnahme (70) aufweist, die der Senkung (48) des Gestells gegenüberliegend angeordnet ist; wobei das elastische Element (36) um die Antriebswelle (30) herum angeordnet und teilweise in der Senkung (48) der Hülse und teilweise in der Aufnahme (70) der Hülse aufgenommen ist.

6. Flugzeugsitz (2) nach einem der Ansprüche 1 bis 5, wobei die Innenseite der Hülse (32) und die Außenseite der Antriebswelle (30) eine Gleitverbindung (58) aufweisen, die sich in Richtung der Drehachse (A-A) erstreckt.

7. Flugzeugsitz (2) nach Anspruch 6, wobei die Innenseite der Hülse (32) und die Außenseite der Antriebswelle (30) zum einen eine Nut (64), die sich in Richtung der Drehachse erstreckt, und zum anderen eine Aussparung (60) und einen Keil (62) aufweisen, der in der Aussparung (60) aufgenommen ist und in der Nut (64) gleiten kann.

8. Flugzeugsitz (2) nach einem der Ansprüche 1 bis 7, wobei die Übertragungsvorrichtung (24) einen ersten Anschlag (90) aufweist, der auf der Antriebswelle (30) angeordnet ist, einen zweiten Anschlag (92), der auf der Antriebswelle (30) in einem vorbestimmten Abstand von dem ersten Anschlag (90) angeordnet ist, und wobei das Zahnrad (34), die Hülse (32), das elastische Element (36) und das Gestell (28) zwischen dem ersten Anschlag (90) und dem zweiten Anschlag (92) auf die Antriebswelle (30) aufgepresst sind.

9. Flugzeugsitz (2) nach Anspruch 8, wobei der erste Anschlag (90) eine an der Außenseite der Antriebswelle (30) ausgebildete Umfangsnut (88) und einen in die Umfangsnut (88) eingebetteten Verriegelungsring (100) aufweist.

## Claims

1. Aircraft seat (2) comprising at least one actuator (20) capable of generating movement and at least one movement transmission device (24), the transmission device (24) comprising:
- a support (38);
- a frame (28) that is fixed relative to the support (38), said frame (28) being provided with an immobilizing portion (52),
- a drive shaft (30) suitable for being driven by the actuator (20) to rotate about an axis of rotation (A-A),
- a gear wheel (34) provided with coupling teeth (82) having inclined side walls (84), said gear wheel (34) being able to rotate freely relative to the drive shaft (30);
- a sleeve (32) slidably mounted on the drive shaft (30) and integral in rotation with the drive shaft (30), the sleeve (32) comprising a complementary immobilizing portion (74) suitable for coupling with the immobilizing portion (52) of the frame as well as coupling teeth (80) having inclined side walls (84) suitable for coupling with the coupling teeth (82) of the gear wheel;
- an elastic member (36) capable of pushing the sleeve (32) along an axial direction towards the gear wheel (34) in order to couple the sleeve (32) to the gear wheel (34); the elastic member having a stiffness; the stiffness of the elastic member (36) and the inclination of the side walls (84) of the coupling teeth (82) of the gear wheel and of the coupling teeth (80) of the sleeve being chosen such that, when a torque greater than a threshold torque is applied to the gear wheel (34), the sleeve (32) slides on the drive shaft (30) from a driving position in which the sleeve (32) is coupled to the gear wheel (34), to an immobilizing position in which the immobilizing portion (52) of the frame is coupled to the complementary immobilizing portion (74) of the sleeve.

2. Aircraft seat (2) according to claim 1, wherein the side walls (84) of the coupling teeth (80) of the sleeve form an angle of between 8° and 30° relative to the axis of rotation (A-A), and wherein the elastic member (36) has a stiffness of between 2 daN/mm and 15 daN/mm.

3. Aircraft seat (2) according to one of claims 1 and 2, wherein the immobilizing portion (52) comprises grooves (56) extending over a first circular arc (C1) and wherein the complementary immobilizing portion (74) comprises projections (76) extending over a second circular arc (C2), the second circular arc (C2) being smaller than the first circular arc (C1).

4. Aircraft seat (2) according to claim 3, wherein the height (H) of the coupling teeth (82) of the gear wheel (34) and/or the height (H) of the coupling teeth (80) of the sleeve (32) is greater than the height (h) of the projections (54) of the immobilizing portion (52) and/or the height (h) of the projections (76) of the complementary immobilizing portion (74).

5. Aircraft seat (2) according to any one of claims 1 to 4, wherein a first end (44) of the frame (28) comprises a counterbore (48), and wherein the sleeve (32) comprises a housing (70) arranged facing the counterbore (48) of the frame; the elastic member (36) is arranged around the drive shaft (30) and housed partly in the counterbore (48) of the sleeve and partly in the housing (70) of the sleeve.

6. Aircraft seat (2) according to any one of claims 1 to 5, wherein the internal face of the sleeve (32) and the external face of the drive shaft (30) comprises a slide connection (58) extending along the direction of the axis of rotation (A-A).

7. Aircraft seat (2) according to claim 6, wherein one among the internal face of the sleeve (32) and the external face of the drive shaft (30) comprises a groove (64) extending along the direction of the axis of rotation, and the other comprises a recess (60) and a pin (62) that is housed in the recess (60) and able to slide in the groove (64).

8. Aircraft seat (2) according to any one of claims 1 to 7, wherein the transmission device (24) comprises a first stop (90) arranged on the drive shaft (30), a second stop (92) arranged on the drive shaft (30) at a predefined distance from the first stop (90), and wherein the gear wheel (34), the sleeve (32), the elastic member (36), and the frame (28) are fitted onto the drive shaft (30) between the first stop (90) and the second stop (92).

9. Aircraft seat (2) according to claim 8, wherein the first stop (90) comprises a peripheral groove (88) formed on the outer face of the drive shaft (30), and a stop ring (100) embedded in the peripheral groove (88).
